# EUROPEAN PATENT SPECIFICATION

(11) **EP 3 315 565 B1**
(45) Date of publication and mention of the grant of the patent: **29.04.2020**
(21) Application number: 17198735.7
(22) Date of filing: 27.10.2017
(51) Int. Cl.: C09D 11/14, C09D 11/36, C09D 11/328

(54) **INK COMPOSITION FOR LIQUID JET PRINTING**
TINTENZUSAMMENSETZUNG FÜR FLÜSSIGKEITSSTRAHLDRUCKEN
COMPOSITION D'ENCRE POUR L'IMPRESSION PAR JET DE LIQUIDE

(30) Priority: 31.10.2016 FR 1660562
(43) Date of publication of application: 02.05.2018
(60) Divisional application: 18205960.0
(73) Proprietor: Dover Europe Sàrl, 1214 Vernier (CH)
(72) Inventor: DE SAINT ROMAIN, Pierre, 26000 VALENCE (FR)
(74) Representative: Brevalex

(56) References cited:
- EP-A1- 2 960 307
- EP-B1- 2 464 696
- WO-A1-2007/094252
- JP-A- H10 158 554

## Description

### TECHNICAL FIELD

The invention relates to an ink composition for marking supports and objects of all types, the properties of which are particularly suitable for liquid jet marking or printing, known as "ink jet" printing or marking on a very wide variety of supports, substrates and objects, and particularly flexible supports, substrates and objects.

### STATE OF THE PRIOR ART

Ink jet printing is a well-known technique which allows printing, marking or decorating all sort of objects, at high speed and without contact of these objects with the printing device, with messages which can be changed at will such as bar codes, sell-by dates etc., even on non-planer supports.

Ink jet printing techniques are divided into two major types, namely the technique known as Drop On Demand or DOD technique, and the technique known as Continuous Ink Jet (CIJ) technique.

Jetting using the drop on demand technique may be done using a so-called "bubble" ink jet, a "piezoelectric" ink jet, a "valve" ink jet, or finally a so-called "Hot Melt" or phase change ink jet.

In the case of a bubble ink jet, ink is vaporised close to the nozzle and this vaporisation causes the ejection of a small quantity of ink located between the resistor that vaporises the ink and the nozzle. In the case of a piezoelectric ink jet, a sudden pressure variation caused by an actuator moved by the electrical excitation of a crystal or a piezoelectric ceramic located close to the nozzle, causes the ejection of an ink drop.

In the case of the "Hot Melt" ink jet, the ink has no solvent and is heated to above its melting point.

Therefore, "Drop On Demand" printing may be carried out at ambient, room, temperature, this is the case of the piezoelectric ink jet, of the valve ink jet, or of the bubble ink jet, or at high temperature, for example from about 60°C to 130°C, this is the case of the so-called Hot Melt (HM) or phase change ink jet.

Continuous deflected ink jet spraying consists of sending ink under pressure into a cavity containing a piezoelectric crystal, from which ink escapes through an orifice (nozzle) in the form of a jet.

The piezoelectric crystal, vibrating at a determined frequency, provokes pressure disturbances in the ink jet, that oscillates and gradually breaks up into spherical droplets. An electrode called the "charging electrode" placed on the path of the jet at the location at which it breaks, applies an electrostatic charge to these drops if the ink is conductive. The dropplets thus charged and deflected and deviated in an electric field to enable printing.

Uncharged drops that are therefore not deflected or deviated are recovered in a gutter from which ink is sucked up, drawn, and then recycled to the ink circuit.

For all ink jet printing techniques and technologies, including the binary continuous deviated, deflected, liquid jet printing technique with uncharged drops called the "SPI" technique, the viscosity of inks at the ink projection temperature is very low, typically from 1 to 10 cPs (mPa.s), or 15 cPs, or 20 cPs, and therefore all these printing techniques that make use of ink jetting, spraying, can be described as low viscosity ink deposition technologies.

Ink jetting, projection, spraying, enables contactless marking at a high running rate on objects that are not necessarily planer with the possibility of changing the message at will.

Ink compositions that can be sprayed, jetted, particularly in continuous deflected, deviated, jetting, spraying, have to satisfy a number of criteria inherent to this technique related to (among other factors) the viscosity, solubility in a solvent for cleaning, compatibility of ingredients, proper wetting of supports to be marked, etc., and electric conductivity in the case of the continuous deflected, deviated jet.

Furthermore, these inks must dry quickly, be capable of flowing or remaining motionless close to the nozzle without clogging it, with good stability of the jet orientation to enable easy cleaning of the print head.

Limitations on the acceptable viscosity for these inks depend firstly on the pressure necessary for jetting the ink drops at a sufficiently high velocity through a small diameter nozzle, and secondly on the relation between the viscosity and the surface tension of the liquid that dictates the rate at which the drops will form. A high viscosity will necessarily require high pressures to obtain the drop jetting velocity, and longer distances between the nozzle and the location at which the drops form.

There is a simple relation between the ink viscosity η, the jet velocity Vⱼ, the pressure P, the surface tension σ, the density of the ink ρ, and the nozzle diameter d. According to this relation, P is proportional to ρ.Vⱼ²+32.η.p.Vⱼ/d² + 2.σ/d.

Ingredients of inks currently used for a continuous deflected, deviated, ink jet printing, are organic or inorganic products; they are colouring materials such as dyes or pigments, resins or binders, in one or several more or less volatile solvent compound(s) or in water, possibly one or several salt(s) that confer conductivity (commonly called conductivity salts), and miscellaneous additives.

Ingredients used in the composition of currently used inks for the drop on demand (DOD) type ink jet are also organic or inorganic products; dyes or pigments, resins or binders, in one or several more or less volatile solvent compound(s) or in water, in different proportions than for inks for a continuous deflected, deviated ink jet printing, but without the need for electrical conductivity.

In the case of inks for the "Hot Melt" inkjet printing, the inks do not contain any liquid solvents at ambient temperature but they do contain liquid organic products at the jetting, spraying, temperature mentioned above, such as waxes and resins with a low molecular mass. These waxes and resins with low molecular mass are generally chosen such that the viscosity of the ink at the jetting, spraying, temperature is 2 to 25 mPa.s.

The solvent for ink jet printing, except for inks for Hot Melt ink jet printing, is usually composed of a mixture comprising firstly a majority quantity of volatile solvent compounds with low viscosity, to enable very fast drying of the markings, and to adjust the viscosity to the required value, for example from 1 to 10 cPs (mPa.s), or 15 cPs, or 20 cPs, and secondly solvent compounds with a higher viscosity and less volatile, that dry more slowly and are in lower quantities, to prevent the ink from drying in the nozzle during phases in which the printer is switched off (see patents or patent applications US-A-4,155,767, WO-A-92 14794, WO-A-92 14795 and US-A-4,260,531).

The most frequently used volatile solvent compounds are alcohols, ketones or esters with low molecular weight, as indicated in patents US-A-4,567,213 and US-A-5,637,139. Among these solvent compounds, essentially methanol, ethanol, 1- and 2-propanol, acetone, methyl-ethyl ketone (*"MEK"*)*,* methylisobutyl ketone, ethyl acetate, and tetrahydrofuran may be cited.

Less volatile solvent compounds that in particular have a drying retarder function are most frequently ketones such as cyclohexanone, glycol ethers mentioned in documents USA-4,024,096 and US-A-4,567,213, ethers and acetals, such as furan or dioxan, mentioned in document US-A-4,155,767, dimethyl formamide or dimethylsulphoxide (US-A-4,155,895), lactones (EP-A-0 034 881), N-Methyl Pyrrolidone (EP-A-0 735 120), glycols (WO-A-96 23844), and even aliphatic hydrocarbons (US-A-4,166,044) or water, alone or in combination with other solvent compounds mentioned above, refer to documents USA4,153,593, GB-A-2 277 094 and FR-A-2 460 982 in this context.

Additives include:
- plasticizers that make the dry ink film more flexible to improve adherence and cohesion of the ink on the marked support.
- dispersants that disperse the pigments. Such dispersants stabilise the pigments by steric effect and/or electrostatic effect depending on whether or not they can be ionised, and depending on the polarity of the solvent.
- agents that inhibit corrosion induced by some salts, such as salts that confer conductivity (called conductivity salts) described below such as chlorides (see documents EP-A-0 510 752, US-A-5,102,458).
- additives that protect the ink against proliferation of bacteria and other microorganisms: these include biocides, bactericides, fungicides and others, particularly useful in inks containing water.
- pH regulation buffers (see EP-A-0 735 120).
- anti-foaming agents.

Inks for ink jet printing can also include surfactants or surface active agents that modify the wetting or penetrating capacity of the ink (see patent US-A-5,395,431), in particular surfactants or surface active agents that modify or regulate the static or dynamic surface tension such as Fluorad® FC 430 made by the 3M company. Such products regularise the size of drop impacts. Due to these products, the impact diameter is the same for all drops regardless of the nature, cleanliness or regularity of the support.

Additives to inks for continuous deviated, deflected, ink jet printing may also include one or several salts called conductivity salts.

The conductivity salt(s), if any, provide the ink with the conductivity necessary for electrostatic deviation. Further information on this subject can be found in document USA-4,465,800. However, it can be noted that in some cases, other ink constituents such as dyes already confer sufficient conductivity to the ink so that there is no need to add a conductivity salt.

Colouring materials are called "dyes or pigments" depending on whether they are soluble or insoluble, respectively, in the solvent used.

Pigments are inherently insoluble, and are therefore dispersed and may or may not be opaque. They impart its colour to the ink, its opaqueness or particular optical properties such as fluorescence (see patents and patent applications US-A-4,153,593, US-A-4,756,758, US-A-4,880,465, EP-A-0 289 141, US-A-5,395,432 and GB-A-2 298 713). In some cases, dyes also confer sufficient conductivity to the ink so that there is no need to add a conductivity salt. This is the case of dyes known under the name C.I. Solvent Black 27, 29, 35 and 45.

Binder(s) or resin(s) is (are) generally, mostly, one or more solid polymeric compound(s) and their choice depends on their solubility in the selected solvents, their compatibility with the dyes and the other additives, their ability to give the right electrostatic charge to the drops, and also depending on the properties that they confer on the ink film once it is dry (see patents or patent applications US-A-4,834,799, GB-A-2 286 402, US-A-5,594,044, US-A-5,316,575, WO-A-96/23844, WO-A-95/29 287).

Their primary function is to provide adherence for the ink on a maximum number of supports or on special supports, for example non-porous supports. They also confer appropriate viscosity to the ink for the formation of drops from the jet and they provide the marking obtained with most of its properties of resistance to physical and/or chemical aggression such as resistance to friction and more generally to abrasion.

The polymers used with organic solvents may be synthetic or natural, they may be linear polymers such as colophane resins, shellac, resins of the acrylic, methacrylic, styrenic, vinylic, cellulosic, and phenolic types, polyamides, polyurethanes, melamines, or polyesters; or branched polymers such as dendrimers (see US-B2-6, 221,933).

Pre-polymers that can be cross-linked by radiation, for example by ultraviolet or electron beams are used in ink compositions and are cross-linked after deposition on the support.

For formulations in the aqueous phase, the polymers are either soluble linear polymers, or dispersions, also called latex. Polymers of these dispersions can be linear or cross-linkable during drying.

Polymers or resins used in jettable, sprayable inks are usually polymers with relatively low molecular mass, for two essential reasons:
- if the molecular masses of the polymers or resins are too high, the viscosity conferred by these polymers or resins is very high and their quantity is very low, and particularly is too low to satisfactorily coat the colouring materials of inks. This is true for all ink jet printing technologies.
- if the molecular masses of the polymers or resins are too high, the electrostatic charges of the drops are not stable and print quality is bad, or printing may even be impossible because it is not easy to separate the drops at the time that they are charged and separation is unstable. This is true for the continuous deflected, deviated, ink jet printing technique type.

It is generally recognised that there is an upper limit for the molecular mass of a polymer or resin contained in an ink composition for printing using the deviated continuous ink jet technique, above which printing by the continuous deviated ink jet technique is not satisfactory or is even impossible.

Thus, patent US-A-6,106,600 shows that nitrocelluloses with a mass of more than 25000 Da cause problems in binary continuous jet printers.

Patent US-B2-7,279,511 specifies that acrylic or styrene-acrylic type resins must have molecular masses less than 100 kDa, or preferably less than 50 kDa and even 20 kDa, if they are to be satisfactorily used in ink compositions for deviated continuous ink jet printing.

Patent US-B2-7,740,694 specifies that polyvinylbutyral resins must have molecular masses of 40 kDa to 80 kDa, so if they are to be satisfactorily used in ink compositions for deviated continuous ink jet printing.

Patent US-B2-8,278,371 specifies that only vinyl chloride copolymers with a molecular mass of less than 30kDa can be used in ink compositions for printing by deviated continuous inkjet printing. Similarly, according to this patent, only polyesters with a molecular mass of between 10 and 50 kDa, or acrylic resins with a molecular mass of less than 65 kDa, can be used in ink compositions for deviated continuous inkjet printing.

Patent US-B2-8,952,078 specifies that acrylic, epoxy, ketonic, nitrocellulosic resins, polyesters, or PVC must have a molecular mass of between 1. 5 and 70 kDa if they are to be used in ink compositions for deviated continuous inkjet printing.

Patent US-B2-9,034,090 specifies that cellulose resins such as hydroxypropyl celluloses, that can be used in ink compositions for deviated continuous inkjet printing have a molecular mass of between 10 and 120 kDa and preferably between 40 and 80 kDa.

Without wishing to be bound by any theory, it would appear that upper limiting values of molecular masses of resins or polymers that can be used in binders for ink jet printing are related to the dynamics of breaking the jet and the extensional viscosity of fluids.

The following article provides further information about this subject: Journal of Non-Newtonian Fluid Mechanics 222 (2015) 171-189.

Expressed simply, when the cylindrical jet exits from the nozzle, it must form drops under the effect of surface tension, and it is subjected to a stretching deformation and no longer to a shearing deformation as is the case within the pipes and the nozzle. When the molecular masses of polymers are too high, drops form but are connected to each other by a liquid string that prevents any individual electric charge for each drop. This phenomenon is called *bead on string".*

Inks for printers that use the *"Drop on Demand" (DOD)* technique are not necessarily affected by this limitation on the molecular mass of polymers or resins of the binder, because, this technique takes advantage of the effects of the larger molecular masses on breaking of the jet, unlike continuous deflected jet. With this technique, the bond between drops according to the *"bead on string"* phenomenon prevents the dispersion of smaller drops.

Therefore, considering the above, there is a serious limitation on the possible values of the molecular mass of resins or polymers that can be used as binder for inks for the deviated, deflected, continuous ink jet printing technique.

Independently of limitations that exist on the molecular mass of the resins or polymers of the binders of these inks, there are also limitations on the possible viscosity of these inks.

This limit is also due to the physics of the jet and depends on the velocity of the jet, the dimensions of the nozzle and of the vibration frequency of the piezoelectric crystal.

The following document in particular contains information about this: Annu. Rev. Fluid Mech.2013.45 :85-113.

Many patents mention possible viscosity values of inks for ink jet printing.

Thus, patent US-A-4,207,577 concerns opaque ink compositions for ink jet printing, and indicates that the viscosities of these inks can be between 1.5 and 25 mPa.s, and preferably between 1.8 and 7.5 mPa.s.

Patent US-A-5,710,195 deals with opaque, unpigmented ink compositions for ink jet printing, that contain a combination of film-forming resins chosen from among nitrocelluloses, alkyd resins, vinyl acetate-vinyl chloride copolymers and styrene-acrylic resins. According to the claims, the viscosity of these inks is between 1 and 20 mPa.s, but said patent does not cite any example to demonstrate this.

Patent US-B1-6,869,986 relates to ink compositions for printing using the deviated continuous ink jet printing technique, and states that the viscosities of these compositions must be between 2 and 10 mPa.s.

Patents US-B2-7,279,511, US-B2-7,520,926, US-B1-6,444,019, US-B1-6,645,280, US-B1-6,726,756, US-B2-7,147,801, and US-B2-7,148,268 relate to ink compositions for ink jet printing and all give the same limits for the possible viscosity for these inks, namely from 1.6 to 7 mPa.s or 1.6 to 10 mPa.s.

Therefore, in the light of the above, there is a need for ink compositions for liquid jet printing, and more particularly for deviated, deflected, continuous jet printing, that are suitable for liquid jet printing and more particularly for deviated, deflected, continuous jet printing, over a range of viscosities or molecular masses of the resins, polymers, of the binder of these inks, wider than the range of viscosities or molecular masses of ink compositions currently used for liquid jet printing and that are described in particular in the documents according to prior art mentioned above.

More precisely, in the light of the above, there is a need for ink compositions for liquid jet printing, and more particularly for continuous deviated, deflected, jet printing, that are suitable for liquid jet printing and more particularly for deviated continuous jet printing, over a range of viscosities or molecular masses of the resins, polymers, of the binder of these inks, for which liquid jet printing was generally considered to be impossible or unsatisfactory, particularly in the documents according to prior art mentioned above.

In otherwords, in the light of the above, there is a need for ink compositions for liquid jet printing, and more particularly for continuous deviated, deflected, jet printing, that are suitable for liquid jet printing and more particularly for deviated, deflected, continuous jet printing, for a viscosity or molecular mass of the resins, polymers, of the binder of these inks, greater than the viscosity or molecular mass for which liquid jet printing was generally considered to be impossible or unsatisfactory, particularly in the documents according to prior art mentioned above.

The expression compositions suitable for liquid jet printing and more particularly for deviated, deflected, continuous jet printing generally means that these ink compositions can be used in printers using this technique without incidents, and that the quality of the printing/marking obtained is good.

In other words, there is a need for ink compositions for liquid jet printing and more particularly for continuous deviated, deflected, jet printing, that are suitable for liquid jet printing and more particularly for deviated continuous jet printing, that circumvent limitations currently accepted in prior art on the viscosity or molecular mass of resins, polymers, of the binder of these inks.

In other words again, there is a need for ink compositions for liquid jet printing and more particularly for continuous deviated, deflected, ink jet printing that offer much wider formulation possibilities than before, as presented particularly in the documents according to the prior art mentioned above.

The goal of the invention is to provide an ink composition for liquid jet printing, and more particularly for continuous deviated, deflected, ink jet printing that, among other things, satisfies all needs, requirements and criteria mentioned above, and that does not have the disadvantages, defects, limitations and disadvantages of compositions according to the prior art, and that overcomes the problems of the compositions according to the prior art.

### SUMMARY OF THE INVENTION

This goal and others are achieved according to the invention by a non-aqueous ink composition for continuous deflected, deviated, ink jet printing comprising:
- a vehicle comprising one or several organic solvent compound(s) that is (are) liquid at ambient temperature;
- one or several dye(s), preferably soluble, and/or pigment(s);
- a binder, comprising at least one binding resin consisting of a cellulose derivative chosen from among cellulose esters, cellulose hydroxyethers, cellulose carboxyethers and mixtures thereof, with an average molecular mass by weight Mw greater than or equal to 120 kDa;
in which said composition has a viscosity greater than 10 mPa.s at 20°C, measured at a shear rate of less than 1000 s⁻¹.

"Soluble dye" generally means a dye of which the molecules are individually dispersed in the solvent, in opposition to pigments for which the molecules are insoluble in the solvent but are in the form of fine particles (in other words solid aggregates of a very large number of molecules) dispersed in the medium.

Advantageously, according to the invention, the ink composition according to the invention may further have a pigment(s) and/or dye(s)/binder mass ratio that is less than 1.5, and preferably less than 1.

The deviated continuous jet printing technique also includes the binary deviated continuous jet printing technique, with uncharged drops called the "SPI" technique.

For convenience and to simplify matters, the binding resin consisting of a cellulose derivative is also called a cellulose resin.

According to the invention, cellulose hydroxyether generally means a compound in which the hydroxyl (-OH) groups of cellulose are partly or entirely transformed into -OR₁ groups, in which R₁ is an organic group comprising at least one hydroxyl group.

Preferably, R₁ is chosen from among linear or branched 1 to 10C, preferably 1 to 4C, even more preferably 2 to 3C, hydroxyalkyl groups such as a hydroxymethyl group, a hydroxyethyl group, or a hydroxypropyl group.

For example, a cellulose hydroxyether can be obtained for example by reaction of all or only some of the hydroxyl (-OH) groups of cellulose with an epoxide to give OR₁ groups.

In the case in which the hydroxyl (-OH) groups of cellulose are only partly transformed into -OR₁ groups, the other hydroxyl groups of cellulose may be partly or entirely transformed into -OR₂ groups, in which R₂ is a linear or branched 1 to 10C, preferably 1 to 4C, even more preferably 2 to 3C, alkyl group like a methyl group.

The partial or total transformation of the other hydroxyl groups of cellulose into-OR₂ groups, in which R₂ is a linear or branched 1 to 10C, preferably 1 to 4C, even more preferably 2 to 3C, alkyl group like a methyl group, can be done by reaction of all or part of the other hydroxyl groups of cellulose with a halogenoalkane. For example, when the R₂ groups are ethyl groups, then this halogenoalkane is chloroethane, and when the R₂ groups are methyl groups, then this halogenoalkane is chloromethane.

In the case in which the hydroxyl (-OH) groups of cellulose are partly or entirely transformed into -OR₁ groups, R₁ being a hydroxyalkyl group, and the cellulose does not contain any hydroxyl groups transformed into -OR₂ groups, then the cellulose hydroxyether obtained is simply called hydroxyalkyl cellulose.

In the case in which only part of the hydroxyl (-OH) groups of cellulose is transformed into -OR₁ groups and the other hydroxyl groups of cellulose are partly or entirely transformed into - OR₂ groups, R₂ being an alkyl group, then the cellulose hydroxyether is called hydroxyalkyl (R₁) alkyl (R₂) cellulose, for example if R₁ is the hydroxypropyl group and if R₂ is the methyl group, then the cellulose hydroxyether obtained will be called hydroxypropylmethyl cellulose.

The properties of cellulose hydroxyethers vary with the substitution group for the hydroxyl group, the degree of substitution and the degree of polymerisation of the molecule.

According to the invention, cellulose ester generally means a compound in which the hydroxyl (-OH) groups of cellulose are partly or completely transformed into -O-(C=O)R₃ organic groups, in which R₃ is an organic group, preferably R₃ is a linear or branched 1 to 10C, preferably 1 to 4C, even more preferably 2 to 3C, alkyl group such as a methyl group, an ethyl group or a butyl group; or else a -C₆H₄-COOH group.

The organic groups -O-(C=O)-R₃ may be identical or different.

These cellulose esters are obtained by reaction of the hydroxyl groups of cellulose with one (case in which the -O-(C=O)-R₃ groups are identical) or several (case in which the -O-(C=O)-R₃ groups are different) organic acids and/or anhydrides.

Thus, in the case in which the hydroxyl groups of cellulose are made to react with acetic acid and acetic anhydride, a cellulose ester is obtained that is cellulose acetate (CA) in which the hydroxyl groups of cellulose are replaced only partly by -O-(C=O)CH₃(R₃ = CH₃) groups, or that is cellulose triacetate (CTA) in which the hydroxyl groups of cellulose are entirely, totally replaced by -O-(C=O)CH₃(R₃ = CH₃) groups.

In the case in which the hydroxyl groups of cellulose are made to react with propanoic acid, a cellulose ester is obtained that is cellulose propionate (CP) in which the hydroxyl groups of cellulose are replaced partly or entirely by -O-(C=O)CH₂CH₃ groups (R₃ = CH₂CH₃).

In the case in which hydroxyl groups of cellulose are made to react with acetic acid and propanoic acid, a cellulose ester is obtained that is cellulose acetopropionate (CAP) in which the hydroxyl groups of cellulose are replaced partly or entirely by -O-(C=O)CH₃(R₃ = CH₃) groups or -O-(C=O)CH₂CH₃ (R₃ = CH₂CH₃) groups.

In the case in which hydroxyl groups of cellulose are made to react with acetic acid and butyric acid, a cellulose ester is obtained that is cellulose acetobutyrate (CAB) in which the hydroxyl groups of cellulose are replaced partly or entirely by -O-(C=O)CH₃ (R₃ = CH₃) groups, or by -O-(C=O)CH₂CH₂CH₃ (R₃ = CH2CH₂CH₃) groups.

In the case in which the hydroxyl groups of cellulose are made to react with acetic acid and phthalic acid, a cellulose ester is obtained that is cellulose acetophthalate in which the hydroxyl groups of cellulose are replaced partly or entirely by -O-(C=O)CH₃ (R₃ = CH₃) groups or -O-(C=O)C₆H₄COOH (R₃ = C₆H₄COOH) groups.

According to the invention, a cellulose ester should also be understood as being a compound in which the hydroxyl (-OH) groups of cellulose are partially transformed into Nitro (NO₂) groups, or are partly or entirely transformed into other groups derived from the reaction of the hydroxyl groups of cellulose with an inorganic acid.

For example, these cellulose esters can be obtained by reaction of the hydroxyl groups of cellulose with one or several nitrating agents such as nitric acid.

Thus, in the case in which the hydroxyl groups of cellulose are made to react with nitric acid or another nitrating agent, a cellulose ester is obtained that is cellulose nitrate (CN) in which the hydroxyl groups of cellulose are replaced only partly by-O-NO₂ groups.

The properties of cellulose esters vary with the substitution group for the hydroxyl group, the degree of substitution and the degree of polymerisation of the molecule.

According to the invention, cellulose carboxyether generally means a compound in which the hydroxyl (-OH) groups of cellulose are partly or entirely transformed into -OR₄ groups, in which R₄ is an organic group comprising at least one carboxyl group.

Preferably, R₄ is chosen from among linear or branched 1 to 10C, preferably 1 to 4C, even more preferably 2 to 3C, carboxyalkyl groups such as a carboxymethyl group, a carboxyethyl group or a carboxypropyl group. Cellulose carboxyether is then called carboxyalkyl cellulose.

A cellulose carboxyether can be obtained for example by reaction of all or of only one part of the hydroxyl (-OH) groups of cellulose with a halogenated carboxylic acid to give OR₄ groups.

For example, when R₄ groups are carboxymethyl groups, this halogenated carboxylic acid is chloroacetic acid, and the carboxyalkyl cellulose obtained is carboxymethyl cellulose (CMC).

Carboxymethyl cellulose is generally used in the form of a sodium salt, namely sodium carboxymethylcellulose (NaCMC).

Finally, according to the invention, the cellulose hydroxyethers are advantageously chosen from among the compounds in which the hydroxyl (-OH) groups of cellulose are partly or entirely transformed into -OR₁ groups, in which R₁ is chosen from among linear or branched 1 to 10C, preferably 1 to 4C, even more preferably 2 to 3C, hydroxyalkyl groups such as a hydroxymethyl group, a hydroxyethyl group or a hydroxypropyl group; and in the case in which the hydroxyl (-OH) groups of the cellulose are only partly transformed into - OR₁ groups, the other hydroxyl groups of the cellulose may optionally be partly or entirely transformed into -OR₂ groups, in which R₂ is a linear or branched 1 to 10C, preferably 1 to 4C, even more preferably 2 to 3C, alkyl group such as a methyl group.

Preferably, the cellulose hydroxyethers are chosen from among hydroxyethyl celluloses (HEC), hydroxypropyl celluloses (HPC), hydroxyethyl methyl celluloses (HEMC), hydroxypropyl methyl celluloses (HPMC), and mixes of them.

According to the invention, the cellulose esters are advantageously chosen from among compounds in which the hydroxyl (-OH) groups of cellulose are partly or entirely transformed into organic groups -O-(C=O)R₃, in which R₃ is a linear or branched 1 to 10C, preferably 1 to 4C, even more preferably 2 to 3C, alkyl group such as a methyl group, an ethyl group or a butyl group; or a -C₆H₄-COOH group, the -O-(C=O)-R₃ organic groups possibly being identical or different; and from among the compounds in which the hydroxyl (-OH) groups of the cellulose are partly transformed into Nitro (NO₂) groups, partly or entirely transformed, or into other groups derived from the reaction of the hydroxyl groups of the cellulose with an inorganic mineral acid.

Preferably, cellulose esters are chosen from among cellulose acetates, cellulose acetobutyrates, cellulose acetopropionates, cellulose nitrates (CN) or nitrocelluloses, and mixtures thereof.

According to the invention, the cellulose carboxyethers are advantageously chosen from among the compounds in which the hydroxyl (-OH) groups of the cellulose are partly or entirely transformed into -OR₄ groups, in which R₄ is chosen from among linear or branched 1 to 10C, preferably 1 to 4C, even more preferably 2 to 3C, carboxyalkyl groups such as a carboxymethyl group, a carboxyethyl group or a carboxypropyl group.

Preferably, the cellulose carboxyethers are chosen from among carboxymethylcelluloses.

Ambient temperature generally means a temperature from 5°C to 30°C, preferably from 10°C to 25°C, even more preferably from 15°C to 24°C, better from 20°C to 23°C.

Obviously, the ink is liquid at atmospheric pressure.

Note once again that molecular mass means the average molecular mass "by weight" Mw, and not the molecular mass "by number" or "in z".

This molecular mass can be determined by Size Exclusion Chromatography also known as Gel Permeation Chromatography (GPC), with calibration by comparison with polystyrene or polymethyl methacrylate standards, or by absolute determination for example by measuring diffusion of light.

This molecular mass by weight is the closest to the maximum of the distribution by mass. All details about these concepts of molecular masses are given in introductory manuals to macromolecular chemistry.

The ink compositions according to the invention are fundamentally different from ink compositions for liquid jet printing and more precisely for deviated continuous jet printing according to the prior art.

Thus, according to the invention, the ink composition according to the invention is fundamentally different from the ink compositions for liquid jet printing and more exactly for deviated continuous jet printing according to the prior art firstly in that it contains a specific binding resin consisting of a specific cellulose derivative chosen from among cellulose esters, cellulose hydroxyethers, cellulose carboxyethers and mixtures thereof, this specific derivative of cellulose having an average specific molecular mass by weight Mw greater than or equal to 120 kDa. This molecular mass is higher than that usually accepted for this application in ink compositions for liquid jet printing and more exactly for deviated continuous jet printing.

According to the invention, the ink composition according to the invention is also fundamentally different from the ink compositions for liquid jet printing according to the prior art in that it has a specific viscosity greater than 10 mPa.s at 20°C and at a shear rate less than 1000 s⁻¹. This viscosity is higher than that usually accepted for this application in ink compositions for liquid jet printing, and more exactly for deviated continuous jet printing.

According to the invention, the ink composition according to the invention is also defined by the fact that dyes contained in it are preferably specifically soluble dyes as defined above.

According to a preferred embodiment, the ink composition according to the invention is also fundamentally different from ink compositions for liquid jet printing according to the prior art in that the pigment(s) and/or dye(s)/binder mass ratio is less than 1.5, and preferably less than 1.

This value of the pigment(s) and/or dye(s)/binder mass ratio is lower than the value of this ratio that is usually accepted for this application in ink compositions for liquid jet printing and more exactly for deviated continuous jet printing.

No document according to the prior art describes nor suggests an ink composition for liquid jet printing and more exactly for deviated continuous jet printing, with all the specific characteristics of the ink composition according to the invention.

Thus, no document according to the prior art describes nor suggests the effective use of a specific cellulose resin chosen from among cellulose esters and cellulose hydroxyethers, with an average molecular mass by weight greater than or equal to 120 kDa in a deviated continuous jet printing technique.

*A fortiori,* no document according to the prior art describes nor suggests the effective use of a specific cellulose resin chosen from among cellulose esters, cellulose hydroxyethers and cellulose carboxyethers with an average molecular mass by weight greater than or equal to 120 kDa; at viscosities of more than 10 mPa.s, measured at 20°C and at a shear rate of less than 1000 s⁻¹ in an ink for the deviated continuous jet printing technique.

*A fortiori,* and similarly, no document according to the prior art describes nor suggests the effective use of a specific cellulose resin chosen from among cellulose esters, cellulose hydroxyethers and cellulose carboxyethers with an average molecular mass by weight greater than or equal to 120 kDa in an ink for the deviated continuous jet printing technique having a pigment(s) and/or dye(s)/binder mass ratio that is less than 1.5, and preferably less than 1.

The invention is based particularly on the surprising finding that firstly, the specific cellulose resins mentioned above used in the invention have a sufficiently pseudoplastic, shear thinning behaviour so that the viscosity at the nozzle is low enough to be jettable without requiring excessively high pressures, and secondly that even at these high viscosities, there is no negative consequence on the breaking of the jet into drops and their electrical charge.

This finding is particularly surprising because the high viscosities at a low shear rate slow the progress of the pressure disturbance leading to breakage of the jet and result in charge and print quality defects.

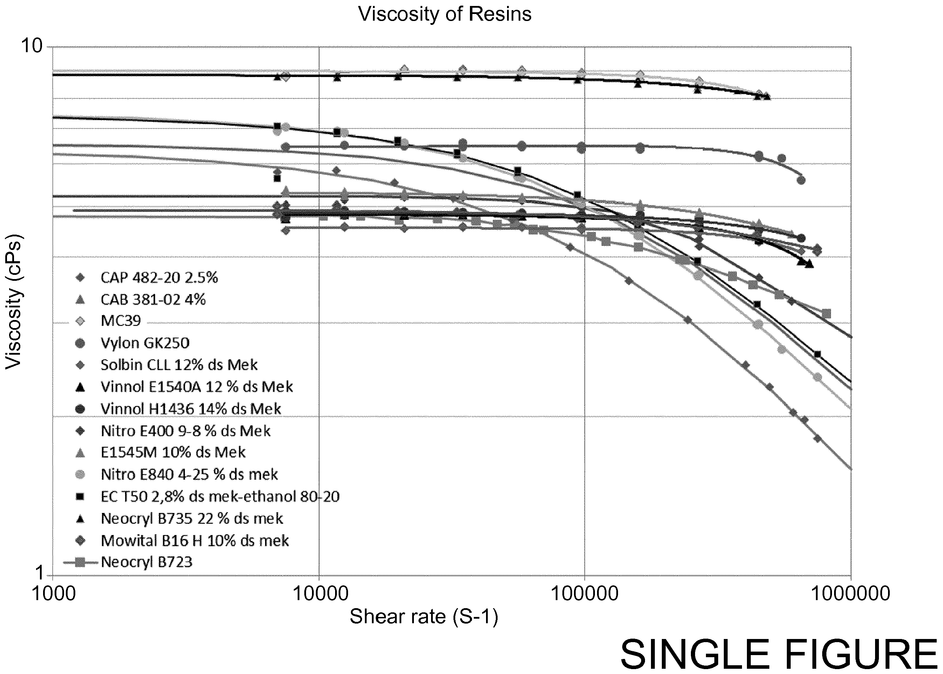

In other words, according to the invention, it is quite unexpectedly demonstrated that the specific cellulose resins mentioned above implemented in the invention have a different rheological behaviour (see single figure) from all other synthetic resins, and particularly from those obtained by polyaddition of unsaturated monomers (for example vinyl, acrylic or methacrylic monomers) or by polycondensation such as for example polyesters , polyamides or polyurethanes.

Thus, the viscosity of the different resins currently used as binders in inks for ink jet printing were measured using a rheometer made by the Rheosense® company (San Ramon, CA 94583, USA). This rheometer is capable of measuring the viscosity of fluids with shear rates from a few s⁻¹ to several thousand s⁻¹.

The curves obtained are shown on the single figure.

It can be seen on this figure that the cellulosic polymers (namely the cellulosic polymers mentioned in the examples) have a very marked pseudoplastic, shear thinning behaviour because their viscosity at approximately 10⁶ s⁻¹ is a factor of 3 to 4 less than that at 1000 s⁻¹.

The other non-cellulosic polymers with a comparable molecular mass have an almost Newtonian behaviour and their viscosity is reduced only by a few %, by a maximum of 20% from 4 to 6x10⁵ s⁻¹.

It would appear that all the specific cellulosic type polymers mentioned above used in the invention have this same pseudoplastic (or shear thinning) behaviour.

It is generally known to the man skilled in the art that inks based on non-cellulose resins with a molecular mass of more than 80 kDa are generally unsuitable for printing using the deviated continuous jet technique, for the reason explained above, namely the jet breaking defect, similar to the bead on string phenomenon.

According to the invention, it has surprisingly been observed that inks based on the specific cellulose resins mentioned above used in the invention do not have this defect.

According to the invention, it has very surprisingly been demonstrated that the specific cellulose resins mentioned above, used in the invention, were perfectly suitable for jetting in non-aqueous ink compositions, even with molecular masses greater than or equal to 120 kDa, and in inks with viscosities higher than and even much higher than 10 mPa.s.

According to the invention, it has also very surprisingly been demonstrated that the specific cellulose resins mentioned above used in the invention were perfectly suitable for jetting in non-aqueous ink compositions, even with molecular masses greater than or equal to 120 kDa, and in inks in which the pigment(s) and/or dye(s)/binder mass ratio is less than 1.5, and preferably less than 1.

It was not at all obvious from known applications of such cellulose resins solubilised in organic solvents that they could be used successfully as binders in ink compositions suitable to be jetted by a deviated continuous jet with such molecular masses and with such viscosities or such pigment(s) and/or dye(s)/binder mass ratios.

In particular, it was absolutely not obvious or predictable from the prior art that the rheological behaviour of the specific cellulose resins mentioned above used in the invention could be so different from the rheological behaviour of the non-cellulose resins.

Thus, the patents mentioned above do not describe nor suggest the use of the specific cellulose resins used in the invention, with molecular masses of greater than or equal to 120 kDa, in solution in an appropriate organic solvent, for use in inks for ink jet printing.

These patents do not include any examples of embodiments comprising the specific cellulose resins mentioned above, used in the invention, with molecular masses greater than or equal to 120 kDa in solution in an organic solvent.

These patents also neither mention nor suggest the use of such cellulose resins in the binder of non-aqueous ink compositions for printing by the deviated continuous ink jet technique at viscosities of more than 10 mPa.s.

Finally, these patents neither mention nor suggest the use of such cellulose resins in the binder of non-aqueous ink compositions for printing by the deviated continuous ink jet technique with pigment(s) and/or dye(s)/binder mass ratios of less than 1.5, and preferably less than 1.

There is no indication in these documents that could have suggested that unexpected and advantageous properties could be obtained by dissolving specific cellulose resins with a molecular mass of greater than or equal to 120 kDa, to formulate inks for continuous deflected ink jet printing, with a viscosity of more than 10 mPa.s at 20°C and or a pigment(s) and/or dye(s)/binder mass ratio of less than 1.5, and preferably less than 1.

In conclusion, the ink compositions according to the invention provide new possibilities for the formulation of inks for continuous deflected ink jet printing including binary continuous deflected ink jet printing, with uncharged drops, called the "SPI" technique, that are not possible according to the prior art.

The ink compositions according to the invention do not have the disadvantages of the ink compositions according to the prior art as represented particularly by the documents mentioned above, and they provide a solution to the problems that arise with compositions according to the prior art.

The ink composition according to the invention is a non-aqueous composition, which generally means that the ink composition according to the invention contains a very low proportion of water.

Thus, the ink composition according to the invention usually comprises less than 0.5% by weight of water, preferably less than 0.1% by weight of water and even more preferably less than 0.05% by weight of water in proportion to the total weight of the ink; even better, the vehicle for example the solvent, and the ink composition may be considered to essentially contain no water (0% by weight of water).

Since the added water is an impurity in the various components of the ink, the water content will be low when the degree of purity of the components is high. In fact, it could be said that the ink according to the invention does not contain any added water but only water included as an impurity in the different constituents of the ink.

Similarly, the vehicle of the ink composition according to the invention is usually non-aqueous in the sense described above, in other words this vehicle is essentially or exclusively organic and only comprises organic solvent compounds.

The binder of the ink composition according to the invention, preferably consisting of at least one binding resin consisting of a cellulose derivative with an average molecular mass by weight greater than or equal to 120 kDa, usually represents from 0.1 to 30% by weight, preferably from 1 to 25% by weight, even more preferably from 3 to 20% by weight, and even better from 3 to 10% by weight, of the total weight of the ink composition.

Advantageously, the binder may comprise at least 10% by weight, preferably at least 50% by weight of said at least one binding resin consisting of a cellulose derivative with an average molecular mass by weight greater than or equal to 120 kDa.

Preferably, the binder may consist of (100% by weight) said at least one binding resin consisting of a cellulose derivative with an average molecular mass by weight greater than or equal to 120 kDa.

Apart from the at least one binding resin consisting of a cellulose derivative with an average molecular mass by weight greater than or equal to 120 kDa, and in the case in which the binder does not only consist of said binding resin, the binder of the ink composition according to the invention may also include one or several other binding resin(s) generally chosen from among resins soluble at ambient temperature in the organic solvent compound(s) of the ink composition.

Resins soluble at ambient temperature in the organic solvent(s) of the ink composition generally mean that these resins are soluble at ambient temperature in all proportions in this or these organic solvent(s).

This or these other binding resin(s) may for example be chosen from among resins soluble in ketone solvents such as polyacrylates, polymethacrylates, polystyrenes and their copolymers, epoxy resins, epoxyphenolics resins, melamines, polyurethanes, polyamides and derivatives of colophane.

The vehicle generally represents from 30 to 95% by weight, preferably from 30 to 90% by weight, even more preferably from 60 to 80% by weight, of the total weight of the ink composition according to the invention.

As already mentioned above, the vehicle comprises and is preferably consists of one or several organic solvent compound(s) liquid at ambient temperature, and possibly water provided that the water quantity respects the conditions mentioned above.

The organic solvent compound(s) of the ink composition according to the invention may be any organic solvent compound capable of dissolving the cellulose resins, with average molecular masses by weight greater than or equal to 120 kDa, according to the invention.

Advantageously, the vehicle comprises a majority amount by weight, as a proportion of the total weight of the vehicle (50% by weight of the total weight of the vehicle or more, or even up to 100% by weight of the total weight of the vehicle), of one or several volatile organic solvent compound(s), and a minority amount by weight, as a proportion of the total weight of the vehicle, of one or more non-volatile organic solvent compound(s).

Preferably, the vehicle consists of one or more volatile organic solvent compound(s).

"Volatile organic solvent compound" generally means that the evaporation rate of this compound is more than 0.5 on the scale in which the evaporation rate of butyl acetate is equal to 1.

Said volatile organic compound(s) forming part of the vehicle is (are) chosen for example from among alcohols, particularly low molecular weight alcohols, for example aliphatic alcohols such as ethanol; ketones preferably with low molecular weight; alkylene glycol ethers; alkylene glycol esters and esters of alkylene glycol ethers such as acetates; dimethyl formamide; N-methyl pyrrolidone; acetals; esters; linear or cyclic ethers; aliphatic, cyclic or linear hydrocarbons; aromatic hydrocarbons; and carbonates such as propylene carbonate, ethylene carbonate and dimethyl and diethylcarbonates; and mixtures thereof.

Alcohols will preferably be chosen from among linear or branched aliphatic alcohols with 1 to 8 carbon atoms such as methanol, ethanol, propanol-1, propanol-2, n-butanol, butanol-2, tert-butanol, etc.

Ketones will preferably be chosen from among ketones with 3 to 10 carbon atoms such as acetone, butanone (methylethylketone or "MEK"), pentanone2 (methylpropylketone or "MPK"), methyl-3 butanone-2 (methyl-isopropyl ketone or "MiPK") and methyl4 pentanone2 (methylisobutylketone or "MiBK").

Alkylene glycol ethers are preferably chosen from among mono-alkyl ethers (C1 to C6 alkyl group) or dialkyl ethers (C1 to C6 alkyl groups) of alkylene glycol comprising 1 to 10 carbon atoms in the alkylene chain, preferably they are ethylene glycols or propylene glycol ethers, such as methoxypropanol.

Alkylene glycol esters and esters of alkylene glycol ethers are preferably chosen from among esters of the above with saturated aliphatic carboxylic acids with 1 to 6 carbon atoms such as formic acid, acetic acid, propionic acid, butyric acid, valeric acid and caproic acid.

Examples include methoxypropyl acetate, butyldiglycol acetate, etc.

Esters are preferably chosen from among esters with low molecular mass such as formiates, acetates, propionates or butyrates of alcohols with 1 to 10 carbon atoms.

Acetals are preferably chosen from among acetals with low molecular mass such as ethylal and methylal.

Ethers are preferably chosen from among ethers with low molecular mass such as dioxolan or tetrahydrofuran.

The man skilled in the art will easily be able to identify which of these solvent compounds are volatile and which are not volatile.

A preferred vehicle according to the invention comprises a majority amount by weight (50% or more by weight) relative to the total weight of the vehicle, preferably consists of, one or several solvent compound(s) chosen from among ketones with 3 to 10 carbon atoms, such as acetone, butanone (methylethylketone or "MEK"), pentanone-2 (methylpropylketone or " MPK"), methyl-3 butanone-2 (methyl-isopropylketone or "MiPK") and methyl-4 pentanone-2 (methylisobutylketone or "MIBK").

One particularly preferred vehicle comprises a majority amount by weight relative to the total weight of the vehicle of MEK, preferably, consists of MEK.

This preferred vehicle may also comprise one or several other solvent compound(s) other than the ketones in a minority total amount by weight (less than 50% by weight), relative to the total weight of the vehicle, for example an amount of 0.1% to 25% by weight, preferably from 0.1 to 20% by weight, even more preferably from 5% to 15% by weight, relative to the total weight of the vehicle, to optimise ink properties. This (these) minority solvent compound(s) may be chosen from among esters, ethers of ethyleneglycol or propyleneglycol, and acetals.

The ink composition according to the invention may possibly contain colouring materials such as dyes and pigments.

The dye(s) and/or pigment(s) may be chosen from among any dyes or pigments suitable for the required use, known to the man skilled in the art, some of these pigments or dyes have already been mentioned above.

The dyes and pigments will generally be chosen from among dyes and pigments known under the name "C.I. Solvent Dyes" and "C.I. Pigments".

Examples of the more frequently used pigments and dyes include C.I. Solvent Black 3, 7, 27, 28, 29, 35, 48, 49, C.I. Solvent Blue 38, 44, 45, 70, 79, 98, 100, 129, C.I. Solvent Red 8, 49, 68, 89, 124, 160, 164, C.I. Solvent Yellow 83:1, 126, 146, 162, C.I. Solvent Green 5, C.I. Solvent Orange 97, C.I. Solvent Brown 20, 52, C.I. Solvent Violet 9, dispersions of Pigment Blue 15:1, 15:3, 60, Pigment Green 7, Pigment Black 7, Pigment Red 48:2, 144, 149, 166, 185, 202, 208, 214, 254, Pigment Violet 19, 23, Pigment Yellow 17, 83, 93, 139, 151, 155, 180, 191, Pigment Brown 23, 25, 41, or Pigment White 6.

The preferred dyes are C.I. Solvent Black 27 and C.I. Solvent Black 29.

The preferred pigments are Pigment white 6, Pigment black 7, Pigment Blue 60, Pigment red 202 and Pigment Green 7.

The dyes are preferably soluble dyes.

The man skilled in the art can easily determine which dyes are soluble in the chosen vehicle.

The total amount of dye(s) and/or pigment(s) is generally between 0.05 to 25% by weight, preferably from 1 to 20%, even more preferably from 3 to 10% of the total weight of the ink composition.

The ink composition may further comprise one or several plasticizer(s) (of the resin(s) or polymers(s) of the binder), chosen for example among plasticizer(s) known to the man skilled in the art and chosen as a function of the binder used comprising a cellulose resin and optionally one or several other polymer(s) and/or resin(s). For example, the plasticizer may be chosen from among thermoplastic polyurethanes, phthalates, adipates, citrates and esters of citric acid, alkyl phosphates, glycerol, lactic acid, oleic acid, polypropylene glycol, triglycerides of fatty acids, levulinic acid; and mixtures thereof.

The plasticizer(s) is (are) generally present in an amount of at least 0.05%, preferably 0.1 to 20% by weight, of the total weight of the ink composition.

The composition according to the invention, if it is required to be jettable, sprayable, using the deflected continuous jet printing technique, may also optionally comprise at least one conductivity salt, unless another ingredient of the ink such as a dye, pigment or other is itself an ionisable compound such as a salt that can confer conductivity when it is dissociated, and gives sufficient conductivity to the ink so that there is no need to add another conductivity salt strictly speaking, which is the case particularly for compounds known under the name "C.I. Solvent Black 27, 29, 35 and 45" mentioned above.

When the ink according to the invention has to be applicable by a deflected continuous ink jet, it must have sufficient electrical conductivity, generally greater than or equal to 5 µS/cm at 20°C, preferably greater than or equal to 300 µS/cm à 20°C, even more preferably greater than or equal to 500 µS/cm at 20°C.

The conductivity of the ink according to the invention could for example by between 300 and 5000 µS/cm at 20°C, particularly between 500 and 2 000 µS/cm at 20°C.

However, it will sometimes be necessary to include at least one conductivity salt strictly speaking into the ink composition, different from ionisable compounds, such as the dyes, pigments and other ingredients mentioned above.

A "conductivity salt" generally means a salt that confers electrical conductivity to the ink composition.

This conductivity salt may thus be chosen from among alkaline metals salts such as lithium, sodium, potassium salts, alkaline earth metal salts such as magnesium and calcium salts, and single or quaternary ammonium salts; these salts being in the form of halides (chlorides, bromides, iodides, fluorides), perchlorates, nitrates, thiocyanates, formiates, acetates, sulphates, propionates, trifluoroacetates, triflates (trifluoromethane sulphonates), hexafluorophosphates, hexafluoroantimonates, tetrafluoroborates, picrates, carboxylates or sulphonates, etc.

Since the markings obtained with the ink composition usually have to be resistant to water, this or these conductivity salts will preferably be chosen from among those that are insoluble in water (in other words, in general, for which the solubility in water is less than 0.5% by weight), such as fatty chain quaternary ammonium and hexafluorophosphates or hexafluroantimonates.

Therefore, this at least one conductivity salt will be present if necessary in the ink composition so as to confer the above conductivity to the ink: preferably, its (their) amount will be from 0.1 to 20% by weight, more preferably from 0.1 to 10% by weight and even better from 0.1 to 5% by weight, of the total weight of the ink composition.

The composition according to the invention may also comprise one or several additives, for example chosen from among the compounds that improve the solubility of some of its components, the print quality, the adherence, or the control of wetting of the ink on different supports.

The additive(s) may be chosen for example from among anti-foaming agents; chemical stabilisers; UV stabilisers; surface active agents such as Fluorad® FC430 or BYK UV-3500; agents inhibiting corrosion by salts, particularly by conductivity salts; bactericides, fungicides and biocides; and pH regulatory buffers, etc.

The additive(s) is (are) used at very low doses, usually less than or equal to 5% and sometimes as low as 0.01%, depending on whether they are anti-foaming agents, stabilisers or surface active agents.

Another object of the invention is a method of marking substrates, supports or objects, for example, porous or non-porous, by spraying an ink on these substrates, supports or objects using the deflected continuous ink jet printing technique, the sprayed ink being an ink composition according to the invention as described above.

Marking is made using the continuous deflected ink jet printing technique. The continuous deflected ink jet printing technique also includes the continuous deflected ink jet printing technique, with uncharged drops called the "SPI" technique.

Another object of the invention is a substrate, support or object, for example porous or non-porous provided with a marking obtained by drying and/or absorption (in the substrate or support) of the ink composition as described above.

Said marking comprises essentially the dye or pigment of the ink and the binder, and is obtained by evaporation and/or absorption in the substrate, of essentially all other constituents of the ink such as the vehicle.

This substrate may be made of metal, for example aluminium, steel (beverage cans); glass (glass bottles); ceramic; of a material containing cellulose such as cellophane, paper, possibly coated or glazed, cardboard or wood; of an organic polymer, particularly a thermoplastic polymer (plastic), particularly in the form of a film, for example chosen from among PVDC, PVC, polyesters, PET, polyolefins, such as polyethylenes (PE), polypropylenes (PP); of poly(methyl methacrylate) PMMA also called "Plexiglas"; of fabric; of natural or synthetic rubber; or of any other non-porous or porous substance; or of a composite of several of the above materials.

The substrate is particularly a flexible or very flexible substrate, such as plastic, preferably thin, film made of cellophane, polyethylene or polypropylene, particularly bi-oriented polypropylene, of polyvinyl chloride (PVC) particularly plastified, or made of polyvinylidene chloride (PVDC); or a rubber substrate.

An excellent quality of markings, printings can be obtained on all substrates, particularly on flexible or very flexible substrates.

### BRIEF DESCRIPTION OF THE DRAWING

The single figure is a graph that shows the measured viscosity (in cPs) of different resins, currently used as binders for inks for ink jet printing, as a function of the shear rate (s⁻¹).

The viscosity is measured using a rheometer made by the Rheosense® company (San Ramon, CA 94583, USA). This rheometer is capable of measuring the viscosity of fluids with shear rates from a few s⁻¹ to several thousand s⁻¹.

The invention will be better understood after reading the following description of embodiments of the invention, given as illustrative and non-limitative examples.

### DETAILED DESCRIPTION OF PARTICULAR EMBODIMENTS

### Examples 1 to 13:

In all of these examples, ink compositions according to the invention are prepared, all containing a binder consisting of a cellulose resin with a molecular mass greater than or equal to 120 kDa, or with a viscosity greater than10 mPa.s.

These ink compositions comprise, beside the cellulose resin, other ingredients mentioned in Table 1, such as dyes, pigments and other additives, and possibly another resin different from the cellulose resin, in the amounts mentioned in Table I.

These ink compositions were prepared by mixing the products, ingredients mentioned in Table I below in the amounts indicated in Table I below.

The viscosities, conductivities and pressures for 20 m/s of the ink compositions are also given in Table I below.

Ink compositions No.1, and No.12 are ink compositions according to the invention and the other ink compositions are reference ink compositions.

**Table I - INK COMPOSITIONS ACCORDING TO THE INVENTION**

| Constituent | | No. 1 | No. 2 | No. 3 | No. 4 | No. 5 | No. 6 | No. 7 | No. 8 | No. 9 | No. 10 | No. 11 | No. 12 | No. 13 |
|---|---|---|---|---|---|---|---|---|---|---|---|---|---|---|
| (percentage by mass) | Mw (kDa) | | | | | | | | | | | | | |
| Methyl-ethyl ketone | | **87** | **75.42** | **94.70** | **23.62** | **92** | **88** | **84.5** | **84** | **87** | **87.3** | **88.59** | **90.5** | **85.45** |
| Ethanol | | | **14.41** | | **63.87** | | | | | | | | | |
| Neplast 2001® | | **1** | | | | | | | | | | | | |
| Nitrocellulose Walsroder E840® | **236** | **8** | | | | | | | | | | | | |
| Ethyl cellulose T50 | **150** | | **3.39** | | | | | | | | | | | |
| Cellulose Acetobutyrate CAB 381-2 | **130-158** | | | | | **4** | | | | | | | **5.5** | |
| Cellulose Acetobutyrate CAB 381-05 | **105** | | | | | | **8** | | | | | | | |
| Cellulose Acetobutyrate CAB 381-01 | **66.8** | | | | | | | **11.8** | | | | | | |
| Cellulose Acetobutyrate CAB 551-02 | **68.6** | | | | | | | | **12** | | | | | **10.91** |
| Cellulose Acetobutyrate CAB 553-04 | **69.7** | | | | | | | | | **9** | | | | |
| Cellulose acetopropionate CAP 482-20 | **215** | | | **2.65** | | | | | | | | | | |
| Cellulose acetopropionate CAP 504--02 | **49.1** | | | | | | | | | | **9.1** | | | |
| Cellulose acetopropionate CAP 482-05 | **94.2** | | | | | | | | | | | **8.15** | | |
| Hydroxypropyl Cellulose Klucel LF® | **95** | | | | **1.39** | | | | | | | | | |
| Tego Variplus SK ® Resin | | | **3.39** | | **3.48** | | | | | | | | | |
| Solvent Black 29 (Orasol black RLI®) | | **4** | **3.39** | **2.65** | | **4** | **4** | **3.6** | **4** | **4** | **3.6** | **3.26** | **4** | **3.64** |
| Dispersion of C.I. Pigment White 6 to 75 % in Neocryl B813® resin | | | | | **6.95** | | | | | | | | | |
| Lithium nitrate | | | | | **0.70** | | | | | | | | | |
| Viscosity (mPa.s) | | 16.2 | 12.5 | 7.13 | 7 | 6.7 | 16 | 14.8 | 18.8 | 14.8 | 11.3 | 12.5 | 14.5 | 14.8 |
| Conductivity (µS/cm) | | 980 | 840 | 820 | 1570 | 1020 | 915 | 830 | 806 | 868 | 809 | 796 | 1040 | 825 |
| Pressure for 20 m/s | | 4 | 4.0 | 3.4 | 3.0 | 2.8 | 3.6 | 4 | 4.2 | 3.6 | 3.5 | 3.7 | 3.5 | 3.5 |

Neplast 2001® is a polymeric plastifier made by the Hagedorn® company.

Walsroder Nitrocellulose resin E840® is a resin available from the Dow® company.

Neocryl® B813 resin is a copolymer of ethyl methacrylates and of an acid monomer giving an acid index of 10 mg KOH/g made by the DSM-Neoresin® company. Its Tg (Glass transition temperature) is 64°C.

Resins CAB 381-2, 381-05, 382-01, 551-02, and 553-04 are cellulose aceto-butyrates made by the Eastman® company.

Resins CAP 482-20, 504-02 and 482-05 are cellulose acetopropionates made by the Eastman® company.

Resin EC T-50 is an ethylcellulose made by the Ashland® company.

Resin Klucel L® is an hydroxypropylcellulose made by the Ashland® company.

Resin Variplus SK® is a polyol resin made by the Tego® company.

Ink compositions according to table I were prepared by mixing the different resins, dyes and other additives in the solvent until complete dissolution.

Molecular masses are molecular masses by weight, measured by GPC calibrated with polymethyl methacrylate, or given by manufacturers as such.

The pressures indicated are pressures necessary to obtain jet velocities of 20 m/s.

All these formulations have been tested in a Markem-Imaje® printer of the continuous ink jet type and gave excellent quality printings.

## Claims

1. Non-aqueous ink composition for continuous deflected ink jet printing comprising:
- a vehicle comprising one or several organic solvent compound(s) that is (are) liquid at ambient temperature;
- one or several dye(s), preferably soluble, and/or pigment(s);
- a binder, comprising at least one binding resin consisting of a cellulose derivative chosen from among cellulose esters, cellulose hydroxyethers, cellulose carboxyethers and mixtures thereof, with an average molecular mass by weight Mw greater than or equal to 120 kDa;
in which said composition has a viscosity greater than 10 mPa.s at 20°C, measured at a shear rate of less than 1000 s⁻¹.

2. Ink composition according to claim 1, which has a pigment(s) and/or dye(s)/binder mass ratio that is less than 1.5, and preferably less than 1.

3. Ink composition according to claim 1 or 2, in which the cellulose hydroxyethers are chosen from among the compounds in which the hydroxyl (-OH) groups of the cellulose are partly or entirely transformed into -OR₁ groups, in which R₁ is chosen from among linear or branched 1 to 10C, preferably 1 to 4C, even more preferably 2 to 3C, hydroxyalkyl groups such as a hydroxymethyl group, a hydroxyethyl group or a hydroxypropyl group; and in the case in which the hydroxyl (-OH) groups of the cellulose are only partly transformed into - OR₁ groups, the other hydroxyl groups of the cellulose may optionally be partly or entirely transformed into -OR₂ groups, in which R₂ is a linear or branched 1 to 10C, preferably 1 to 4C, even more preferably 2 to 3C, alkyl group such as a methyl group ; preferably, the cellulose hydroxyethers are chosen from among hydroxyethyl celluloses (HEC), hydroxypropyl celluloses (HPC), hydroxyethyl methyl celluloses (HEMC), hydroxypropyl methyl celluloses (HPMC), and mixtures thereof.

4. Ink composition according to claim 1 or 2, in which the cellulose esters are chosen from among compounds in which the hydroxyl (-OH) groups of the cellulose are partly or entirely transformed into organic groups -O-(C=O)R₃, in which R₃ is a 1 to 10C linear or branched, preferably 1 to 4C, even more preferably 2 to 3C, alkyl group such as a methyl group, an ethyl group or a butyl group; or a -C₆H₄-COOH group, the -O-(C=O)-R₃ organic groups possibly being identical or different; and from among the compounds in which the hydroxyl (-OH) groups of the cellulose are partly transformed into Nitro (NO₂) groups, or are partly or entirely transformed into other groups derived from the reaction of the hydroxyl groups of the cellulose with an inorganic, mineral, acid ; preferably, the cellulose esters are chosen from among cellulose acetates, cellulose acetobutyrates, cellulose acetopropionates, cellulose nitrates (CN) or nitrocelluloses, and mixtures thereof.

5. Ink composition according to claim 1 or 2, in which the cellulose carboxyethers are chosen from among the compounds in which the hydroxyl (-OH) groups of the cellulose are partly or entirely transformed into -OR₄ groups, in which R₄ is chosen from among linear or branched 1 to 10C, preferably 1 to 4C, even more preferably 2 to 3C, carboxyalkyl groups such as a carboxymethyl group, a carboxyethyl group or a carboxypropyl group.

6. Ink composition according to any one of the preceding claims, in which the binder represents from 0.1 to 30% by weight, preferably from 1 to 25% by weight, even more preferably from 3 to 20% by weight, and even better from 3 to 10% by weight, of the total weight of the ink composition.

7. Ink composition according to any one of the preceding claims, in which the binder comprises at least 10% by weight, preferably at least 50% by weight of said at least one binding resin consisting of a cellulose derivative.

8. Ink composition according to any one of the preceding claims, in which in addition to said least one binding resin consisting of a cellulose derivative, the binder further comprises one or several other binding resin(s).

9. Ink composition according to any one of the preceding claims, in which the vehicle represents from 30 to 95% by weight, preferably from 30 to 90% by weight, even more preferably from 60 to 80% by weight of the total weight of the ink composition.

10. Ink composition according to any one of the preceding claims, in which said organic solvent compound(s) of the vehicle is (are) chosen from among alcohols, particularly low molecular weight alcohols, for example aliphatic alcohols such as ethanol; ketones preferably with low molecular weight; alkylene glycols ethers; alkylene glycols esters and esters of alkylene glycols ethers such as acetates; dimethyl formamide; N-methyl pyrrolidone; acetals; esters; linear or cyclic ethers; aliphatic, cyclic or linear hydrocarbons; aromatic hydrocarbons; and carbonates such as propylene carbonate, ethylene carbonate and dimethyl and diethylcarbonates; and mixtures thereof.

11. Ink composition according to claim 10, in which the vehicle comprises a majority amount by weight (50% or more by weight) relative to the total weight of the vehicle, preferably consists of, one or several solvent compound(s) chosen from among ketones with 3 to 10 carbon atoms, such as acetone, butanone (methylethylketone or "MEK"), pentanone-2 (methylpropylketone or " MPK"), methyl-3 butanone-2 (methylisopropylketone or "MiPK") and methyl-4 pentanone-2 (methylisobutylketone or "MIBK") ; preferably, the vehicle comprises a majority amount by weight relative to the total weight of the vehicle of MEK, preferably, consists of MEK.

12. Ink composition according to claim 10 or 11, in which the vehicle further comprises one or several other solvent compound(s) other than the ketones in a minority total amount by weight (less than 50% by weight), relative to the total weight of the vehicle, for example in an amount of 0.1% to 25% by weight, preferably from 0.1 to 20% by weight, even more preferably from 5% to 15% by weight, relative to the total weight of the vehicle, preferably this or these minority solvent compound(s) are chosen from among esters, ethyleneglycol or propyleneglycol ethers, and acetals.

13. Ink composition according to anyone of the preceding claims, in which said dye(s) and/or said pigment(s) is (are) chosen from among the dyes and pigments known under the name "C.I. Solvent Dyes" and "C I. Pigments" ; preferably, said "Solvent Dye(s)" is (are) chosen among C.I. Solvent Black 3, 7, 27, 28, 29, 35, 48, 49, C.I. Solvent Blue 38, 44, 45, 70, 79, 98, 100, 129, C.I. Solvent Red 8, 49, 68, 89, 124, 160, 164, C.I. Solvent Yellow 83:1, 126, 146, 162, C.I. Solvent Green 5, C.I. Solvent Orange 97, C.I. Solvent Brown 20, 52, and C.I. Solvent Violet 9 ; preferably, said "C.I.(s) pigment(s)" is (are) chosen among dispersions of Pigment Blue 15:1, 15:3,60, Pigment Green 7, Pigment Black 7, Pigment Red 48:2,144,149, 166, 185, 202, 208, 214, 254, Pigment Violet 19, 23, Pigment Yellow 17, 83, 93, 139, 151, 155, 180, 191, Pigment Brown 23, 25, 41, or Pigment White 6.

14. Ink composition according to any one of the preceding claims, comprising a total of 0.05 to 25% by weight of dye(s) and/or pigment(s), preferably from 1 to 20%, even more preferably 3 to 10% by weight of dye(s) and/or pigment(s) relative to the total weight of the ink composition.

15. Ink composition according to any one of the preceding claims, also comprising one or several plasticizers with a content of at least 0.05%, preferably from 0.1 to 20% by weight of the total weight of the ink composition.

16. Ink composition according to any one of the preceding claims, also comprising at least one conductivity salt with a content of 0.1 to 20% by weight, preferably from 0.1 to 10% by weight, even more preferably from 0.1 to 5% by weight of the total weight of the ink composition ; preferably, said conductivity salt is chosen from among salts of alkaline metals such as lithium, sodium, potassium, salts of alkali earth metals such as magnesium and calcium, and single or quaternary ammonium salts; these salts being in the form of halides, perchlorates, nitrates, thiocyanates, formiates, acetates, sulphates, propionates, trifluoroacetates, triflates (trifluoromethane sulphonates), hexafluorophosphates, hexafluoroantimonates, tetrafluoroborates, picrates, carboxylates or sulphonates, etc.

17. Ink composition according to any one of the preceding claims, that has a conductivity in the liquid state greater than or equal to 5 µS/cm at 20°C, preferably greater than or equal to 300 µS/cm a 20°C, even more preferably greater than or equal to 500 µS/cm at 20°C.

18. Ink composition according to any one of the preceding claims, that also comprises one or several additive(s) chosen from among anti-foam agents; chemical stabilisers; UV stabilisers; surface active agents; agents inhibiting corrosion by salts, bactericides, fungicides and biocides; and pH regulation buffers.

19. Method for marking a substrate, support or object by spraying an ink onto this substrate, support or object using the continuous deflected ink jet technique, **characterised in that** the sprayed ink is an ink composition according to any one of claims 1 to 18.

## Patentansprüche

1. Nichtwässrige Tintenzusammensetzung für kontinuierliches, abgelenktes Tintenstrahldrucken, umfassend:
- einen Träger, der eine oder mehrere organische Lösungsmittelverbindung(en) umfasst, die bei Umgebungstemperatur flüssig ist (sind),
- einen oder mehrere Farbstoff(e), vorzugsweise löslich, und/oder Pigment(e),
- ein Bindemittel, das mindestens ein aus einem Zellulosederivat bestehendes Bindeharz umfasst, das ausgewählt ist aus Celluloseestern, Cellulosehydroxyethern, Cellulosecarboxyethern und Mischungen davon, mit einer durchschnittlichen gewichtsbezogenen Molekularmasse Mw größer oder gleich 120 Da,
wobei die Zusammensetzung eine Viskosität von mehr als 10 mPa·s bei 20 °C, gemessen bei einer Schergeschwindigkeit von weniger als 1000 s⁻¹, aufweist.

2. Tintenzusammensetzung gemäß Anspruch 1, die ein Massenverhältnis von Pigment(en) und/oder Farbstoff(en)/Bindemittel aufweist, das weniger als 1,5, vorzugsweise weniger als 1 beträgt.

3. Tintenzusammensetzung gemäß Anspruch 1 oder 2, in der die Cellulosehydroxyether ausgewählt sind aus den Verbindungen, in denen die Hydroxylgruppen (-OH) der Cellulose teilweise oder vollständig in -OR₁-Gruppen umgewandelt sind, wobei R₁ aus linearen oder verzweigten Hydroxyalkylgruppen mit 1 bis 10C, vorzugsweise 1 bis 4C, noch bevorzugter 2 bis 3C, wie zum Beispiel einer Hydroxymethylgruppe, einer Hydroxyethylgruppe oder einer Hydroxypropylgruppe ausgewählt ist und in dem Fall, in dem die Hydroxylgruppen (-OH) der Cellulose nur teilweise in -OR₁-Gruppen umgewandelt sind, die anderen Hydroxylgruppen der Cellulose gegebenfalls teilweise oder vollständig in -OR₂-Gruppen umgewandelt werden können, wobei R₂ eine lineare oder verzweigte Alkylgruppe mit 1 bis 10C, vorzugsweise 1 bis 4C, noch bevorzugter 2 bis 3C, wie zum Beispiel eine Methylgruppe ist; vorzugsweise sind die Cellulosehydroxyether aus Hydroxyethylcellulosen (HEC), Hydroxypropylcellulosen (HPC), Hydroxyethylmethylcellulosen (HEMC), Hydroxypropylmethylcellulosen (HPMC) und deren Gemischen ausgewählt.

4. Tintenzusammensetzung gemäß Anspruch 1 oder 2, in der die Celluloseester ausgewählt sind aus Verbindungen, in denen die Hydroxylgruppen (-OH) der Cellulose teilweise oder vollständig in organische Gruppen -O-(C=O)R₃ umgewandelt sind, wobei R₃ eine lineare oder verzweigte Alkylgruppe mit 1 bis 10C, vorzugsweise 1 bis 4C, noch bevorzugter 2 bis 3C, wie zum Beispiel eine Methyl-, Ethyloder Butylgruppe, oder eine Gruppe -C₆H₄-COOH ist, wobei die organischen Gruppen -O-(C=O)-R₃ gegebenfalls gleich oder verschieden sein können, und aus den Verbindungen, in denen die Hydroxylgruppen (-OH) der Cellulose teilweise in Nitrogruppen (NO₂) oder teilweise oder vollständig in andere Gruppen umgewandelt sind, die aus der Reaktion der Hydroxylgruppen der Cellulose mit einer anorganischen, mineralischen Säure stammen; vorzugsweise werden die Celluloseester aus Celluloseacetaten, Celluloseacetobutyraten, Celluloseacetopropionaten, Cellulosenitraten (CN) oder Nitrocellulosen und deren Gemischen ausgewählt.

5. Tintenzusammensetzung gemäß Anspruch 1 oder 2, in der die Cellulosecarboxyether ausgewählt sind aus den Verbindungen, in denen die Hydroxylgruppen (-OH) der Cellulose teilweise oder vollständig in -OR₄-Gruppen umgewandelt sind, wobei R₄ ausgewählt ist aus linearen oder verzweigten Carboxyalkylgruppen mit 1 bis 10C, vorzugsweise 1 bis 4C, noch bevorzugter 2 bis 3C, wie zum Beispiel einer Carboxymethylgruppe, einer Carboxyethylgruppe oder einer Carboxypropylgruppe.

6. Tintenzusammensetzung gemäß einem der vorstehenden Ansprüche, in der das Bindemittel 0,1 bis 30 Gew.-%, vorzugsweise 1 bis 25 Gew.-%, noch bevorzugter 3 bis 20 Gew.-% und noch besser 3 bis 10 Gew.-% des Gesamtgewichts der Tintenzusammensetzung ausmacht.

7. Tintenzusammensetzung gemäß einem der vorstehenden Ansprüche, in der das Bindemittel mindestens 10 Gew.-%, vorzugsweise mindestens 50 Gew.-% des mindestens einen Bindeharzes, das aus einem Cellulosederivat besteht, umfasst.

8. Tintenzusammensetzung gemäß einem der vorstehenden Ansprüche, in der zusätzlich zu dem mindestens einen Bindeharz, das aus einem Cellulosederivat besteht, das Bindemittel ferner ein oder mehrere andere Bindeharz(e) umfasst.

9. Tintenzusammensetzung gemäß einem der vorstehenden Ansprüche, in der der Träger 30 bis 95 Gew.-%, vorzugsweise 30 bis 90 Gew.-%, noch bevorzugter 60 bis 80 Gew.-% des Gesamtgewichts der Tintenzusammensetzung ausmacht.

10. Tintenzusammensetzung gemäß einem der vorstehenden Ansprüche, in der die genannte(n) organische(n) Lösungsmittelverbindung(en) des Trägers ausgewählt ist (sind) aus Alkoholen, insbesondere Alkoholen mit niedrigem Molekulargewicht, wie zum Beispiel, aliphatischen Alkoholen wie Ethanol, Ketonen, vorzugsweise mit niedrigem Molekulargewicht, Alkylenglykolethern, Alkylenglykolestern und Estern von Alkylenglykolethern wie zum Beispiel Acetaten, Dimethylformamid, N-Methylpyrrolidon, Acetalen, Estern, linearen oder cyclischen Ethern, aliphatischen, cyclischen oder linearen Kohlenwasserstoffen, aromatischen Kohlenwasserstoffen und Carbonaten wie zum Beispiel Propylencarbonat, Ethylencarbonat und Dimethyl- und Diethylcarbonaten und Gemischen davon.

11. Tintenzusammensetzung gemäß Anspruch 10, in welcher der Träger eine mehrheitliche Gewichtsmenge (50 Gew.-% oder mehr), bezogen auf das Gesamtgewicht des Trägers, von einer oder mehreren Lösungsmittelverbindung(en), die aus Ketonen mit 3 bis 10 Kohlenstoffatomen ausgewählt ist (sind), wie zum Beispiel Aceton, Butanon (Methylethylketon oder "MEK"), Pentanon-2 (Methylpropylketon oder "MPK"), Methyl-3-Butanon-2 (Methylisopropylketon oder _{"}MiPK") und Methyl-4-Pentanon-2 (Methylisobutylketon oder _{"}MIBK") umfasst, vorzugsweise daraus besteht; vorzugsweise umfasst der Träger eine mehrheitliche Gewichtsmenge MEK, bezogen auf das Gesamtgewicht des Trägers, vorzugsweise besteht er aus MEK.

12. Tintenzusammensetzung gemäß Anspruch 10 oder 11, in welcher der Träger ferner eine oder mehrere andere Lösungsmittelverbindung(en) außer den Ketonen in einer Minderheitsgesamtmenge nach Gewicht (weniger als 50 Gew.-%), bezogen auf das Gesamtgewicht des Trägers, beispielsweise in einer Menge von 0,1 bis 25 Gew.-%, vorzugsweise 0,1 bis 20 Gew.-%, noch bevorzugter 5 bis 15 Gew.-%, bezogen auf das Gesamtgewicht des Trägers umfasst, wobei diese Minderheitslösungsmittelverbindung(en) vorzugsweise aus Estern, Ethylenglykol- oder Propylenglykolethern und Acetalen ausgewählt ist (sind).

13. Tintenzusammensetzung gemäß einem der vorstehenden Ansprüche, in welcher der (die) Farbstoff(e) und/oder das (die) Pigment(e) aus den unter der Bezeichnung "C.I. Solvent Dyes" und "C I. Pigments" bekannten Farbstoffen und Pigmenten ausgewählt ist (sind); der (die) genannte(n) "Solvent Dye(s)" ist (sind) vorzugsweise aus C.I. Solvent Black 3, 7, 27, 28, 29, 35, 48, 49, C.I. Solvent Blue 38, 44, 45, 70, 79, 98, 100, 129, C.I. Solvent Red 8, 49, 68, 89, 124, 160, 164, C.I. Solvent Yellow 83:1, 126, 146, 162, C.I. Solvent Green 5, C.I. Solvent Orange 97, C.I. Solvent Brown 20, 52 und C.I. Solvent Violet 9 ausgewählt; das (die) genannten "C.I.(s) Pigment(s)" ist (sind) vorzugsweise aus Dispersionen von Pigment Blue 15:1, 15:3, 60, Pigment Green 7, Pigment Black7, Pigment Red 48:2, 144, 149, 166, 185, 202, 208, 214, 254, Pigment Violet 19, 23, Pigment Yellow 17, 83, 93, 139, 151, 155, 180, 191, Pigment Brown 23, 25, 41 oder Pigment White 6 ausgewählt.

14. Tintenzusammensetzung gemäß einem der vorstehenden Ansprüche, umfassend insgesamt 0,05 bis 25 Gew.-% Farbstoff(e) und/oder Pigment(e), vorzugsweise 1 bis 20 %, noch bevorzugter 3 bis 10 Gew.-% Farbstoff(e) und/oder Pigment(e), bezogen auf das Gesamtgewicht der Tintenzusammensetzung.

15. Tintenzusammensetzung gemäß einem der vorstehenden Ansprüche, umfassend auch einen oder mehrere Weichmacher mit einem Gehalt von mindestens 0,05 %, vorzugsweise von 0,1 bis 20 Gew.-% des Gesamtgewichts der Tintenzusammensetzung.

16. Tintenzusammensetzung gemäß einem der vorstehenden Ansprüche, umfassend auch mindestens ein Leitfähigkeitssalz mit einem Gehalt von 0,1 bis 20 Gew.-%, vorzugsweise von 0,1 bis 10 Gew.-%, noch bevorzugter von 0,1 bis 5 Gew.-% des Gesamtgewichts der Tintenzusammensetzung; vorzugsweise ist das Leitfähigkeitssalz aus den Salzen von Alkalimetallen wie zum Beispiel Lithium, Natrium, Kalium, den Salzen von Erdalkalimetallen wie zum Beispiel Magnesium und Kalzium und den einfachen oder quaternären Ammoniumsalzen ausgewählt, wobei diese Salze in Form von Halogeniden, Perchloraten, Nitraten, Thiocyanaten, Formiaten, Acetaten, Sulfaten, Propionaten, Trifluoracetaten, Triflaten (Trifluormethansulfonaten), Hexafluorphosphaten, Hexafluorantimonaten, Tetrafluorboraten, Picraten, Carboxylaten oder Sulfonaten usw. vorliegen.

17. Tintenzusammensetzung gemäß einem der vorstehenden Ansprüche, die im flüssigen Zustand eine Leitfähigkeit von größer als oder gleich 5 µS/cm bei 20 °C, vorzugsweise größer als oder gleich 300 µS/cm à 20 °C, noch bevorzugter größer als oder gleich 500 µS/cm bei 20 °C aufweist.

18. Tintenzusammensetzung gemäß einem der vorstehenden Ansprüche, die auch einen oder mehrere Zusatzstoff(e) umfasst, der (die) unter Antischaummitteln, chemischen Stabilisatoren, UV-Stabilisatoren, oberflächenaktiven Mitteln, Mitteln zum Hemmen von Korrosion durch Salze, Bakterizide, Fungizide und Biozide sowie pH-Regulierungspuffern ausgewählt ist (sind).

19. Verfahren zum Markieren eines Substrats, Trägers oder Gegenstands durch Aufsprühen einer Tinte auf dieses Substrat, diesen Träger oder diesen Gegenstand unter Verwendung der Technik des kontinuierlichen abgelenkten Tintenstrahls, **dadurch gekennzeichnet, dass** die aufgesprühte Tinte eine Tintenzusammensetzung gemäß einem der Ansprüche 1 bis 18 ist.

## Revendications

1. Composition d'encre non aqueuse pour l'impression par jet d'encre continu dévié comprenant :
- un véhicule comprenant un ou plusieurs composé(s) solvant(s) organique(s) liquide(s) à la température ambiante ;
- un ou plusieurs colorant(s), de préférence soluble(s), et/ou pigment(s) ;
- un liant, comprenant au moins une résine liante constituée d'un dérivé de cellulose choisi parmi les esters de cellulose, les hydroxyéthers de cellulose, les carboxyéthers de cellulose et leurs mélanges, de masse moléculaire moyenne en poids Mw supérieure ou égale à 120 kDa ;
dans laquelle ladite composition d'encre a une viscosité supérieure à 10 mPa.s à 20°C mesurée à une vitesse de cisaillement inférieure à 1000 s⁻¹.

2. Composition d'encre selon la revendication 1, qui a un rapport en masse pigments(s) et/ou colorant(s)/liant qui est inférieur à 1,5, et de préférence inférieur à 1.

3. Composition d'encre selon la revendication 1 ou 2, dans laquelle les hydroxyéthers de cellulose sont choisis parmi les composés dans lesquels les groupes hydroxyle (-OH) de la cellulose sont en partie ou en totalité transformés en groupes -OR₁, dans lesquels R₁ est choisi parmi les groupes hydroxyalkyle linéaires ou ramifiés de 1 à 10C, de préférence de 1 to 4C, de préférence encore de 2 to 3C, tels qu'un groupe hydroxyméthyle, un groupe hydroxyéthyle; ou un groupe hydroxypropyle ; et dans le cas où les groupes hydroxyle (-OH) de la cellulose sont seulement en partie transformés en groupes -OR₁, les autres groupes hydroxyle de la cellulose peuvent être éventuellement en partie ou en totalité transformés en groupes -OR₂, dans lesquels R₂ est un groupe alkyle linéaire ou ramifié de 1 à 10C, de préférence de 1 à 4C , de préférence encore de 2 à 3C, tel qu'un groupe méthyle ; de préférence, les hydroxyéthers de cellulose sont choisis parmi les hydroxyéthyl celluloses (HEC), les hydroxypropyl celluloses (HPC), les hydroxyéthyl méthyl celluloses (HEMC), les hydroxypropyl méthyl celluloses (HPMC), et leurs mélanges.

4. Composition d'encre selon la revendication 1 ou 2, dans laquelle les esters de la cellulose sont choisis parmi les composés dans lesquels les groupes hydroxyle (-OH) de la cellulose sont en partie ou en totalité transformés en groupes organiques -O-(C=O)R₃, dans lesquels R₃ est un groupe alkyle linéaire ou ramifié de 1 to 10C, de préférence de 1 à 4C, de préférence encore de 2 à 3C, tel qu'un groupe méthyle, un groupe éthyle ou un groupe butyle; ou un groupe -C₆H₄-COOH, les groupes organiques -O-(C=O)-R₃ étant éventuellement identiques ou différents; et parmi les composés dans lesquels les groupes hydroxyle I (-OH) de la cellulose sont en partie transformés en groupe Nitro (NO₂), ou sont en partie ou en totalité transformés en d'autres groupes dérivés de la réaction des groupes hydroxyle de la cellulose avec un acide inorganique ,minéral ; de préférence , les esters de cellulose sont choisis parmi les acétates de cellulose, les acétobutyrates de cellulose, les acétopropionates de cellulose, les nitrates de cellulose (CN) ou nitrocelluloses, et leurs mélanges.

5. Composition d'encre selon la revendication 1 ou 2, dans laquelle les carboxyéthers de cellulose sont choisis parmi les composés dans lesquels les groupes hydroxyle (-OH) de la cellulose sont en partie ou en totalité transformés en groupes -OR₄, dans lesquels R₄ est choisi parmi les groupes carboxyalkyle linéaires ou ramifiés de 1 to 10C, de préférence de 1 to 4C, de préférence encore de 2 à 3C, tel qu'un groupe carboxyméthyle group, un groupe carboxyéthyle ou un groupe carboxypropyle.

6. Composition d'encre selon l'une quelconque des revendications précédentes, dans laquelle le liant représente de 0,1 à 30% en poids, de préférence de 1 à 25% en poids, de préférence encore de 3 à 20% en poids, mieux de 3 à 10% en poids du poids total de la composition d'encre.

7. Composition d'encre selon l'une quelconque des revendications précédentes, dans laquelle le liant comprend au moins 10% en poids, de préférence au moins 50% en poids de ladite au moins une résine liante constituée d'un dérivé de cellulose.

8. Composition d'encre selon l'une quelconque des revendications précédentes, dans laquelle outre ladite au moins une résine liante constituée d'un dérivé de cellulose, le liant comprend, en outre, une ou plusieurs autres résine(s) liante(s).

9. Composition d'encre selon l'une quelconque des revendications précédentes, dans laquelle le véhicule représente de 30 à 95% en poids, de préférence de 30 à 90% en poids, de préférence de 60 à 80% en poids, du poids total de la composition d'encre.

10. Composition d'encre selon l'une quelconque des revendications précédentes, dans laquelle le ou lesdits composé(s) solvant(s) organique(s) du véhicule est(sont) choisi(s), parmi les alcools, en particulier, les alcools de bas poids moléculaire, par exemple, les alcools aliphatiques tels que l'éthanol ; les cétones de préférence de bas poids moléculaire ; les éthers d'alkylène glycols ; les esters d'alkylène glycols et les esters d'éthers d'alkylène glycols, tels que les acétates; le diméthyl formamide ; la N-méthyl pyrrolidone ; les acétals ; les esters ; les éthers linéaires ou cycliques ; les hydrocarbures aliphatiques, cycliques ou linéaires ; les hydrocarbures aromatiques ; et les carbonates tels que le carbonate de propylène, le carbonate d'éthylène et les diméthyl et diéthylcarbonates ; et leurs mélanges.

11. Composition selon la revendication 10, dans lequel le véhicule comprend une quantité majoritaire en poids (50% en poids ou plus) par rapport au poids total du véhicule, de préférence est constitué, d'un ou plusieurs composé(s) solvant(s) choisi(s) parmi les cétones de 3 à 10 atomes de carbone, telles que l'acétone, la butanone (méthyléthylcétone ou « MEK »), la pentanone-2 (méthylpropylcétone ou « MPK »), la méthyl-3 butanone-2 (méthyl-isopropylcétone ou « MiPK ») et la méthyl-4 pentanone-2 (méthylisobutylcétone ou « MIBK ») ; de préférence, le véhicule comprend une quantité majoritaire en poids par rapport au poids total du véhicule de MEK, de préférence est constitué par de la MEK.

12. Composition selon la revendication 10 ou 11, dans lequel le véhicule comprend, en outre, un ou plusieurs autres composé(s) solvant(s) autres que la (les) cétone(s) en une quantité totale minoritaire en poids (inférieure à 50% en poids), par rapport au poids total du véhicule, par exemple en une quantité de 0,1% à 25% en poids, de préférence de 0,1% à 20% en poids, de préférence encore de 5% à 15% en poids par rapport au poids total du véhicule, de préférence ce(s) composé(s) solvant(s) minoritaires sont choisis parmi les esters, les éthers d'éthylèneglycol ou de propylèneglycol, et les acétals.

13. Composition d'encre selon l'une quelconque des revendications précédentes, dans laquelle ledit ou lesdits colorant(s) et/ou pigment(s) est(sont) choisi(s) parmi les colorants et pigments connus sous la dénomination de « C.I. Solvent Dyes » et « C I. Pigments » ; de préférence, ledit ou lesdits « Solvent Dyes » est(sont) choisi(s) parmi les C.I. Solvent Black 3, 7, 27, 28, 29, 35, 48, 49, les C.I. Solvent Blue 38, 44, 45, 70, 79, 98, 100, 129, les C.I. Solvent Red 8, 49, 68, 89, 124, 160, 164, les C.I. Solvent Yellow 83 :1, 126, 146, 162, les C.I. Solvent Green 5, les C.I. Solvent Orange 97, les C.I. Solvent Brown 20, 52, et les C.I. Solvent Violet 9 ; de préférence, ledit ou lesdits « C I. Pigments » est(sont) choisi(s) parmi les dispersions de Pigment Blue 15 :1, 15 :3, 60, de Pigment Green 7, de Pigment Black 7, de Pigment Red 48 :2, 144, 149, 166, 185, 202, 208, 214, 254, de Pigment Violet 19, 23, de Pigment Yellow 17, 83, 93, 139, 151, 155, 180, 191, de Pigment Brown 23, 25, 41, ou de Pigment White 6.

14. Composition d'encre selon l'une quelconque des revendications précédentes, comprenant au total de 0,05 à 25% en poids de colorant(s) et/ou pigment(s), de préférence de 1 à 20%, de préférence encore de 3 à 10% en poids de colorant(s) et/ou pigment(s) par rapport au poids total de la composition d'encre.

15. Composition d'encre selon l'une quelconque des revendications précédentes, comprenant, en outre, un ou plusieurs plastifiant(s) à raison d'au moins 0,05%, de préférence 0,1 à 20% en poids du poids total de la composition d'encre.

16. Composition d'encre selon l'une quelconque des revendications précédentes, comprenant, en outre, au moins un sel de conductivité à raison de 0,1 à 20% en poids, de préférence de 0,1 à 10% en poids, de préférence encore de 0,1 à 5% en poids du poids total de la composition d'encre ; de préférence, ledit sel de conductivité est choisi parmi les sels de métaux alcalins tels que le lithium, le sodium, le potassium, les sels de métaux alcalino-terreux tels que le magnésium et le calcium, et les sels d'ammonium simples ou quaternaires ; ces sels étant sous la forme d'halogénures, de perchlorates, de nitrates, de thiocyanates, de formiates, d'acétates, de sulfates, de propionates, de trifluoroacétates, de triflates(trifluorométhane sulfonates), d'hexafluorophosphates, d'hexafluoroantimonates, de tétrafluoroborates, de picrates, de carboxylates ou de de sulfonates, etc.

17. Composition d'encre selon l'une quelconque des revendications précédentes, qui a une conductivité à l'état liquide supérieure ou égale à 5 µS/cm à 20°C, de préférence supérieure ou égale à 300 µS/cm à 20°C, de préférence encore supérieure ou égale à 500 µS/cm à 20°C.

18. Composition d'encre selon l'une quelconque des revendications précédentes, comprenant, en outre, un ou plusieurs additif(s) choisi(s) parmi les agents anti-mousse ; les stabilisants chimiques ; les stabilisants UV ; les agents tensio-actifs ; les agents inhibant la corrosion par les sels ; les bactéricides, les fongicides et les biocides ; et les tampons régulateurs de pH.

19. Procédé de marquage d'un substrat, support, ou objet par projection sur ce substrat, support ou objet, d'une encre par la technique d'impression par jet d'encre continu dévié, **caractérisé en ce que** l'encre projetée est une composition d'encre selon l'une quelconque des revendications 1 à 18.
